# EUROPEAN PATENT APPLICATION

(11) **EP 3 112 875 A1**
(43) Date of publication of application: **04.01.2017**
(21) Application number: 15175118.7
(22) Date of filing: 02.07.2015
(51) Int. Cl.: G01N 35/04

(54) **TRANSPORT DEVICE, LABORATORY SAMPLE DISTRIBUTION SYSTEM AND LABORATORY AUTOMATION SYSTEM**

(71) Applicant: Roche Diagnostics GmbH, 68305 Mannheim (DE); F. Hoffmann-La Roche AG, 4070 Basel (CH)
(72) Inventor: Riether, Christian, 64367 Mühltal (DE)
(74) Representative: Patentanwälte Ruff, Wilhelm, Beier, Dauster & Partner mbB

(57) **Abstract**

The invention relates to a transport device for a laboratory sample distribution system, to a laboratory sample distribution system comprising such a transport device or a piggyback transport plane and to a laboratory automation system comprising such a laboratory sample distribution system. The transport device or the laboratory sample distribution system comprises a respective piggyback transport plane in order to transport a certain amount of sample container carriers over a certain distance even if an area on a transport plane of the laboratory sample distribution system is crowded.

## Description

### Applicable field and prior art

The invention relates to a transport device for a laboratory sample distribution system, to a laboratory sample distribution system comprising such a transport device, and to a laboratory automation system comprising such a laboratory sample distribution system.

Known laboratory sample distribution systems are typically used in laboratory automation systems in order to transport samples contained in sample containers between different laboratory stations.

A typical laboratory sample distribution system comprising a transport plane is shown in document WO 2013/064656 A1. Such a laboratory sample distribution system provides for a high throughput and for reliable operation. It has been found, however, that the laboratory sample distribution systems can show operating situations in which the overall throughput may be reduced, especially if a high volume of samples has to be distributed over long distances.

### Object and solution

It is thus an object of the invention to provide for a transport device for a laboratory sample distribution system that can simplify and accelerate transport over large distances even in crowded situations. It is a further object of the invention to provide for a laboratory sample distribution system comprising such a transport device or being otherwise adapted to provide for simple and fast transport over large distances. It is a further object of the present invention to provide for a laboratory automation system comprising such a laboratory sample distribution system.

These objects are achieved by a transport device according to claim 1, a laboratory sample distribution system according to claim 12, a laboratory sample distribution system according to claim 14, and a laboratory automation system according to claim 15.

The invention relates to a transport device for a laboratory sample distribution system.

The laboratory sample distribution system comprises a number of sample container carriers, wherein the sample container carriers are adapted to carry one or more sample containers, wherein the sample containers comprise samples, e.g. to be analyzed by means of laboratory stations.

The laboratory sample distribution system comprises a transport plane, wherein the transport plane is adapted to support or carry the sample container carriers.

The laboratory sample distribution system comprises drive means, wherein the drive means are adapted to move the sample container carriers on the transport plane.

The laboratory sample distribution system further comprises a control device, wherein the control device is configured to control the drive means such that the sample container carriers move over the transport plane along predetermined transport paths. Especially, the control device can be adapted to activate the electromagnetic actuators such that the sample container carriers move simultaneously and independently from one another along pre-calculated routes.

It is noted that the laboratory sample distribution system just described is not part of the transport device, but is an entity with which the transport device can be operated. With respect to the laboratory sample distribution system, reference is made to the statements given further below with respect to the inventive laboratory sample distribution system.

The transport device comprises a number of posts and a piggyback transport plane. The piggyback transport plane is held above the transport plane by means of the posts such that a free space is defined or formed between the transport plane and the piggyback transport plane when the transport device is placed on the transport plane. The transport device is adapted to be moved by means of the drive means over or on top of the transport plane. The transport plane of the laboratory sample distribution system may be denoted as a first transport plane and the piggyback transport plane may be denoted as a second transport plane.

By means of the inventive transport device it is possible to load a number, typically a plurality, of sample container carriers, sample containers, cartridges or other items on the piggyback transport plane and to transport the loaded entities simultaneously using the transport device. The items may e.g. be reagents, tubes, tips, pipetting heads, labels, cartridges comprising a set of reagents used in laboratory stations and/or other consumables used by the laboratory stations. Due to the special configuration having the posts and the free space, the piggyback transport plane can move over a crowded area of the transport plane, especially over typical sample container carriers carrying respective sample containers placed on the transport plane. Thus, even cross-junctions or other crowded areas can be overcome by lifting items to be transported over a typically larger distance to the piggyback transport plane. The posts require a significantly smaller space on the transport plane and even other sample container carriers with respective sample containers can tunnel the transport device below the piggyback transport plane.

The piggyback transport plane can be embodied similarly to the transport plane of the laboratory sample distribution system. However, it can also be embodied as a plain surface on which items can be placed.

According to an embodiment, the free space has a height exceeding a height of a compound comprising a sample container carrier and a sample container carried by the sample container carrier. This allows the transport device to drive through a crowded area with the piggyback transport plane moving over the sample container carriers carrying their respective sample containers.

According to an embodiment, the transport device comprises a number of magnetically active devices arranged inside the posts for interaction with a magnetic field generated by the drive means such that a resulting magnetic drive force is applied to the transport device. The drive means can be embodied as electro-magnetic actuators.

By means of such an embodiment, the transport device can be driven by means of the electromagnetic actuators using magnetic fields generated by the electro-magnetic actuators. In other words, the transport device can be driven over the transport plane by similar means as used for driving the sample container carriers.

The magnetically active devices may be embodied as permanent magnets, wherein in each post, e.g. in the bottom of each post, a corresponding permanent magnet is arranged. Thus, each post can be controlled like a sample container carrier, especially if the post and a sample container carrier have similar or identical shapes and/or horizontal cross-sections.

According to an embodiment, the drive means are formed as wheels driven by electric motors being located in the posts and being controllable by the electronic control device of the sample distribution system. This provides for self-propelled transport devices that do not rely on being driven by electro-magnetic actuators. For example, the transport device can move independently on the transport plane, wherein it should be understood that in such situations typically also sample container carriers may be equipped similarly.

According to an embodiment, the transport device comprises a number of electro-magnetic actuators being located below the piggyback transport plane for generating a magnetic field for interaction with magnetically active devices comprised by the sample container carriers such that a magnetic drive force is applied to the sample container carriers when being supported by the piggyback transport plane. Thus, sample container carriers can be moved on or over the piggyback transport plane similarly as they can be moved on or over the transport plane of the laboratory sample distribution system, especially if magnetic drive means are used, as described above.

According to an embodiment, the piggyback transport plane comprises a number of flat areas being adapted to support items, especially cartridges. Such flat areas can be used in order to transport items like cartridges that cannot move independently or cannot be driven similarly to the sample container carriers. For example, such items like cartridges can be placed on the piggyback transport plane by means of a pack and place device or other suitable handling means.

According to an embodiment, the flat areas are divided from each other and/or from an area having electro-magnetic actuators arranged below the piggyback transport plane by bars or rails. This allows for a structuring of the piggyback transport plane in order to simplify transportation. The piggyback transport plane or the transport device can also comprise locking means in order to secure items like cartridges or sample container carriers. This can improve security and reliability while driving and can prevent accidents due to items falling down from the piggyback transport plane. The locking means can be remote-controllable, for example by the control device of the laboratory sample distribution system.

According to an embodiment, the transport device comprises a number of sample container holding means positioned on the piggyback transport plane. The sample container holding means are adapted to carry/hold/fix one or more sample containers. This embodiment allows for a separate transportation of sample containers even if they are not contained in sample container carriers. In other words, sample containers can be transported without using sample container carriers.

According to an embodiment, the transport device comprises a handling means. The handling means may be adapted to transfer sample containers to and from sample container holding means of the transport device. It can also be adapted to transfer sample container carriers and/or items to and from the piggyback transport plane. The handling means can, for example, be embodied as a gripping device, a crane or a robotic device.

According to an embodiment, the transport device comprises means to vertically lift the piggyback transport plane between an upper position and a lower position, wherein in the lower position the piggyback transport plane flushes with the transport plane, and wherein in the upper position the free space is defined or formed between the transport plane and the piggyback transport plane.

By means of such an embodiment, sample container carriers or other items that can move or can be moved on the transport plane can be moved on the piggyback transport plane for loading the transport device. In a similar way, such items can be unloaded from the transport device. This allows for loading and unloading of the transport device without having to rely on separate handling means or similar components.

According to an embodiment, the transport device comprises a rechargeable battery for power supply and charging means adapted to charge the battery with electric power obtained from a power rail or by wireless power transmission. This allows for a reliable and efficient power supply of the transport device, for example in order to operate handling means or wheels.

The invention relates further to a laboratory sample distribution system. The laboratory sample distribution system comprises a number of sample container carriers, wherein the sample container carriers are adapted to carry one or more sample containers, wherein the sample containers comprise samples.

The laboratory sample distribution system comprises a transport plane, wherein the transport plane is adapted to support or carry the sample container carriers.

The laboratory sample distribution system further comprises drive means, wherein the drive means are adapted to move the sample container carriers on the transport plane.

The laboratory sample distribution system further comprises one or more transport devices according to the invention.

The laboratory sample distribution system further comprises a control device, wherein the control device is configured to control the drive means such that the sample container carriers and the transport device move over the transport plane along predetermined transport paths. The control device can be adapted to activate the electromagnetic actuators such that the sample container carriers and/or the transport device move simultaneously and independently from one another along pre-calculated routes.

According to an embodiment, the control device is configured to set a transport path for the transport device such that the piggyback transport plane of the transport device moves over a plurality of sample container carriers carrying sample containers being positioned on the transport plane. This allows for an efficient transport of items by the transport device even over crowded areas.

According to an embodiment, the control device is configured to control loading and unloading of sample container carriers to and from the piggyback transport plane. This allows for an inclusion of the transport device in the planning of transport tasks done by the control device, as the control device can also effect loading and unloading on the transport device or the piggyback transport plane.

The laboratory sample distribution system may comprise a number of piggyback transport planes, wherein the piggyback transport planes are located besides or adjacent to the transport plane and are movable along at least one edge of the transport plane. The drive means may be adapted to move the sample container carriers on the transport plane, on the piggyback transport planes and between the transport plane and the piggyback transport planes. The laboratory sample distribution system may comprise a propulsion means to move the piggyback transport planes along the at least one edge of the transport plane. The control device may be configured to control the drive means such that the sample container carriers move over the transport plane and the piggyback transport planes along predetermined transport paths. The control device can be adapted to activate the electromagnetic actuators such that the sample container carriers move simultaneously and independently from one another along pre-calculated routes. According to this embodiment, the piggyback transport planes can be moved, e.g. along edges of the transport plane, in order to provide for a bundled fast transportation of a plurality of sample container carriers.

According to an embodiment, the drive means are embodied as wheels being driven by respective motors, wherein the motors and the wheels can be used to propel the sample container carriers and/or the transport device. According to another embodiment, the drive means can comprise electro-magnetic actuators positioned in rows and columns below the transport plane and/or the piggyback transport plane, wherein typically the sample container carriers and/or the posts of the transport device comprise respective magnetically active devices, preferably in the form of permanent magnets.

The sample containers are typically designed as tubes made of glass or transparent plastic and typically have an opening at an upper end. The sample containers can be used to contain, store and transport samples, such as blood samples or chemical samples.

The transport plane can also be denoted as transport surface. The transport plane supports the sample container carriers, what can also be denoted as carrying the sample container carriers.

The electro-magnetic actuators, if they are present, are typically built as electromagnets, having a solenoid surrounding a ferromagnetic core. These electro-magnetic actuators may be energized in order to generate a magnetic field that can be used to move or drive the sample container carriers. For that purpose, the at least one magnetically active device in each sample container carrier may be a permanent magnet. Alternatively or additionally, an electromagnet can be used.

The control device is typically a microprocessor, a microcontroller, a field-programmable gate array, a standard computer or a similar device. In a typical embodiment, the control device comprises processor means and storage means, wherein program code is stored in the storage means in order to control the behavior of the processor means when the storage code is executed on the processor means.

The sample container carriers are typically adapted to move in two dimensions on the transport plane. For that purpose, the electro-magnetic actuators may be arranged in two dimensions below the transport plane. The electro-magnetic actuators may be arranged in a grid or matrix having rows and columns along which the electro-magnetic actuators are arranged. The same may apply for the piggyback transport plane.

The invention further relates to a laboratory automation system. The laboratory automation system comprises a number (e.g. 2 to 20) of laboratory stations, preferably in form of pre-analytical, analytical and/or post-analytical stations. The laboratory automation system further comprises a sample distribution system according to the invention to distribute the samples between the laboratory stations.

Pre-analytical stations may be adapted to perform any kind of pre-processing of samples, sample containers and/or sample container carriers.

Analytical stations may be adapted to use a sample or part of the sample and a reagent to generate a measuring signal, the measuring signal indicating if and in which concentration, if any, an analyte is existing.

Post-analytical stations may be adapted to perform any kind of post-processing of samples, sample containers and/or sample container carriers.

The pre-analytical, analytical and/or post-analytical stations may comprise at least one of a decapping station, a recapping station, an aliquot station, a centrifugation station, an archiving station, a pipetting station, a sorting station, a tube type identification station, a sample quality determining station, an add-on buffer station, a liquid level detection station, and a sealing/desealing station.

The laboratory automation system can comprise a storage module, wherein the storage module is adapted to be attached to the laboratory sample distribution system. The storage module may comprise a number of storage means for storing items that are to be transported by means of the transport device. The items may e.g. be reagents, tubes, tips, pipetting heads, labels, cartridges comprising a set of reagents used in laboratory stations and/or other consumables used by the laboratory stations. The storage means may be adapted to dispose the stored items to the transport device.

### Short description of the drawings

The invention will be described in detail with respect to the drawing schematically depicting embodiments of the invention. In detail:
- fig. 1: shows a transport device according to a first embodiment of the invention,
- fig. 2: shows a transport device according to a second embodiment of the invention,
- fig. 3: shows a laboratory automation system according to a first embodiment of the invention,
- fig. 4: shows a laboratory automation system according to a second embodiment of the invention.

### Detailed description of the embodiments

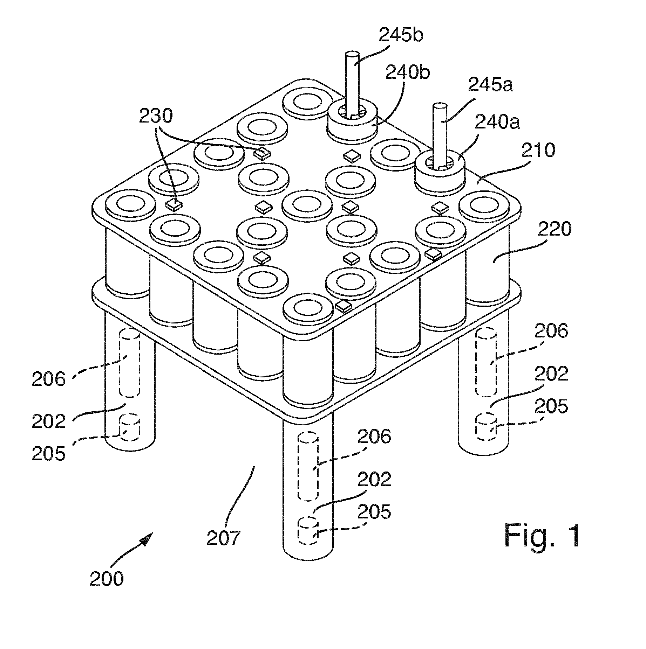

Fig. 1 shows a transport device 200 according to a first embodiment of the invention.

The transport device 200 comprises four posts 202, wherein three of the posts 202 are visible in fig. 1. A fourth post 202 is located at the upper corner of the transport device 200 similarly to the three visible posts 202.

The transport device 200 comprises a piggyback transport plane 210. Below the piggyback transport plane 210, a number of altogether 21 electro-magnetic actuators 220, which are embodied as electromagnets, are located. These electro-magnetic actuators 220 and the piggyback transport plane 210 are supported by the posts 202.

The posts 202 lift the electro-magnetic actuators 220 and the piggyback transport plane 210 such that a free space 207 is provided under the electro-magnetic actuators 220 and the piggyback transport plane 210. In other words, the free space 207 provides for the possibility to move the transport device 200 over certain obstacles as long as they are not higher than the free space 207 and not wider than the horizontal space defined between the posts 202.

Over the piggyback transport plane 210, a number of position sensors 230, being embodied as Hall sensors, are located.

On the piggyback transport plane 210, a number of sample container carriers can be placed, wherein two sample container carriers 240a, 240b are shown exemplarily. It should be noted that in principle a respective sample container carrier 240 can be placed above each of the electro-magnetic actuators 220.

Each of the sample container carriers 240a, 240b carries a respective sample container 245a, 245b, wherein these sample containers 245a, 245b are embodied as typical laboratory tubes. Thus, they can transport liquid samples to be analyzed.

Each of the sample container carriers 240a, 240b comprises a respective magnetically active device in the form of a permanent magnet that is not visible in fig. 1. Using this magnetically active device, a magnetic force can be exerted on each of the sample container carriers 240a, 240b by the electro-magnetic actuators 220. Thus, the sample container carriers 240a, 240b can be moved over the piggyback transport plane 210 using the electro-magnetic actuators 220. At the same time, the position of each of the sample container carriers 240 can be sensed by the position sensors 230, because the position sensors 230 can sense respective magnetic fields generated by the magnetically active devices of the sample container carriers 240a, 240b.

Inside each of the posts 202, a respective magnetically active device 205 in the form of a permanent magnet is provided. Using these magnetically active devices 205, the transport device 200 can be moved over a transport plane of a laboratory sample distribution system in a similar way as the sample container carriers 240a, 240b or sample container carriers that are located on the transport plane on which the transport device 200 is located.

In each of the posts 202, a rechargeable battery 206 is arranged for power supply of the transport device 200. These batteries 206 provide for electric power in order to drive the electromagnetic actuators 220.

It should be noted that the free space 207 has a height that is sufficient to move the electromagnetic actuators 220 over a typical sample container carrier carrying a respective sample container and being placed on the transport plane of a laboratory sample distribution system on which the transport device 200 moves. Thus, a total number of up to 21 sample container carriers can be transported over a certain distance using the transport device 200.

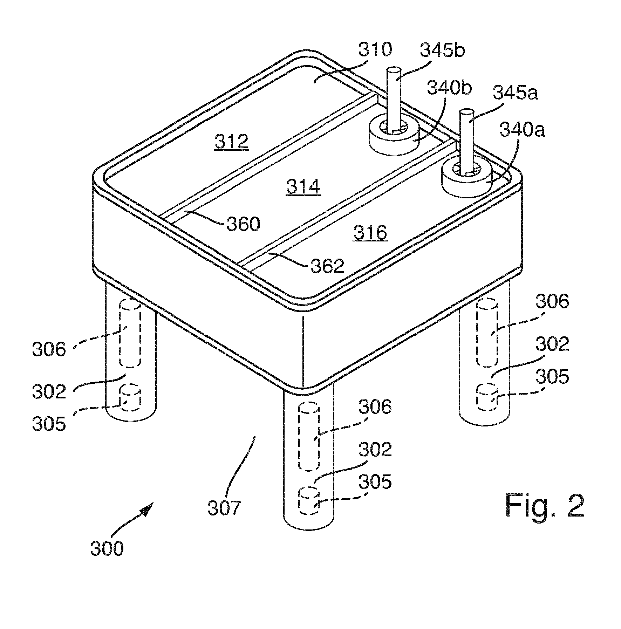

Fig. 2 shows a transport device 300 according to a second embodiment of the invention.

Similarly to the transport device 200 according to the first embodiment, the transport device 300 according to the second embodiment comprises four posts 302 each comprising a magnetically active device 305, holding a piggyback transport plane 310 such that a free space 307 is defined below the piggyback transport plane 310. Respective batteries 306 are also present in the posts 302.

In contrast to the first embodiment, the transport device 300 according to the second embodiment does not comprise electro-magnetic actuators, but has its piggyback transport plane 310 recessed and divided into three flat areas 312, 314, 316. The division is done by a first bar 360 and a second bar 362. Thus, items like, for example, cartridges can be placed on the flat areas 312, 314, 316 and can be held by the bars 360, 362 to be transported over a certain distance. The advantages relating to moving over crowded areas are similar to the transport device 200 according to the first embodiment.

Furthermore, the transport device 300 according to the second embodiment comprises a first sample container holding means 340a and a second sample container holding means 340b. Each of the sample container holding means 340a, 340b carries a respective sample container 345a, 345b. Using these sample container holding means 340a, 340b, which are permanent parts of the transport device 300 and cannot be separated from it, it is possible to easily transport also sample containers 345 over a certain distance using the transport device 300.

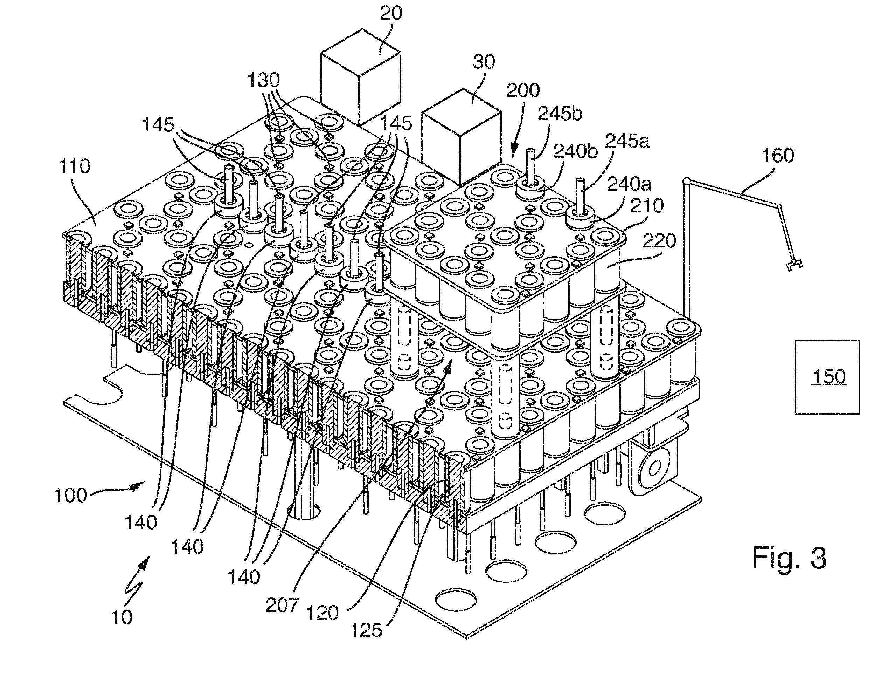

Fig. 3 shows a laboratory automation system 10 according to a first embodiment of the invention. The laboratory automation system 10 comprises a first laboratory station 20, a second laboratory station 30 and a laboratory sample distribution system 100. It should be noted that the laboratory stations 20, 30 are shown exemplarily here and that typical laboratory automation systems 10 comprise a more than two laboratory stations 20, 30.

The laboratory sample distribution system 100 comprises a transport plane 110. Below the transport plane 110, a plurality of drive means in the form of electro-magnetic actuators 120, each embodied as solenoid, are located. Each electro-magnetic actuator 120 comprises a ferromagnetic core 125.

A plurality of position sensors 130 is distributed over the transport plane 110. Also these position sensors 130 are embodied as Hall sensors.

On the transport plane 110, a plurality of sample container carriers 140 is located. Each sample container carrier 140 carries a respective sample container 145.

The elector-magnetic actuators 120 and the position sensors 130 are each operatively connected with a control device 150 which can control the electro-magnetic actuators 120 and can receive respective signals from the position sensors 130. Thus, the control device 150 is able to move the sample container carriers 140, each of them also having a magnetically active device in the form of a permanent magnet not visible in fig. 3, over the transport plane 110 similarly as described with respect to the first embodiment of a transport device 200 above.

The laboratory sample distribution system 100 further comprises a transport device 200 according to the first embodiment of the invention. As shown, the two sample container carriers 240a, 240b that have already been shown in fig. 1 are placed on the piggyback transport plane 210 for exemplary purposes.

All the sample container carriers 140 that are placed directly on the transport plane 110 are currently arranged along a line. The free space 207 of the transport device 200 has a height that allows to move the loaded transport device 200 over the crowded area shown as the line of sample container carriers 140 arranged on the transport plane 110. This allows to quickly move a number of sample container carriers over such crowded areas, which can increase system throughput and reliability.

In order to move sample container carriers 140, 240a, 240b between the transport plane 110 and the piggyback transport plane 210, a gripping device 160 in the form of a robotic arm is provided as a part of the laboratory sample distribution system 100. The gripping device 160 can also be controlled by the control device 150. This allows the control device 150 to place a number of sample container carriers 140 carrying respective sample containers 145 on the piggyback transport plane 210 for transportation over a certain distance, especially over crowded areas. Similarly, the sample container carriers 240a, 240b carrying their respective sample containers 245a, 245b can be put back on the transport plane 110.

As the posts 202 of the transport device 200 each comprise the magnetically active device 205, the transport device 200 can be moved by the control device 150 using the electro-magnetic actuators 120 similarly to the sample container carriers 140. It should, however, be taken care of the fact that the posts 202 may each behave as a single sample container carrier 140 with regard to movement on the transport plane 110, but the posts 202 are always in a certain orientation relative to each other.

It should be noted that the transport device 300 according to the second embodiment of the invention could also be used similarly to the transport device 200 according to the first embodiment of the invention as part of the laboratory sample distribution system 100.

In addition, it should also be noted that a plurality of identical or different transport devices can be used on the transport plane 110.

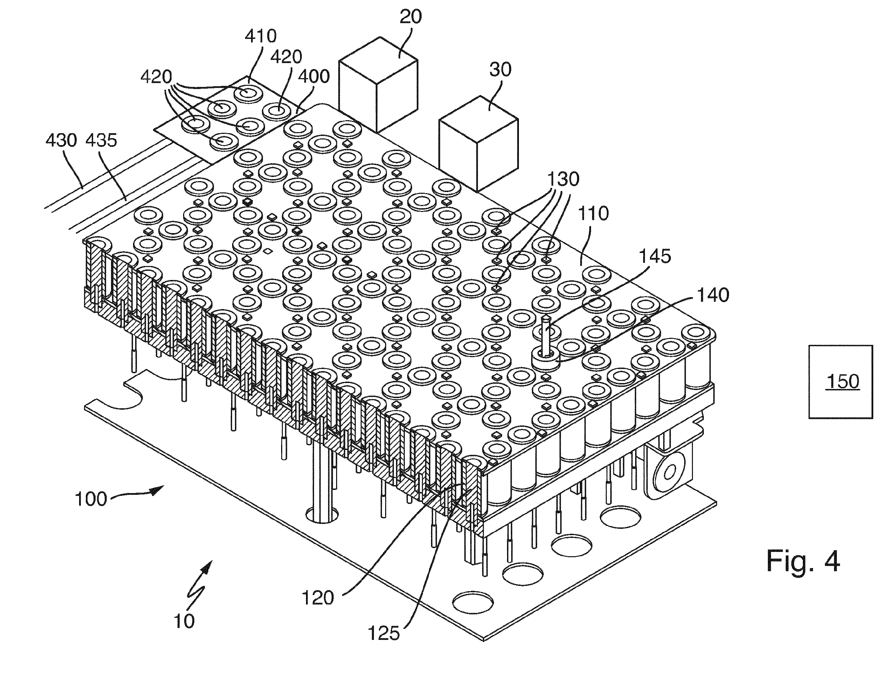

Fig. 4 shows a laboratory automation system 10 according to a second embodiment of the invention. The laboratory automation system 10 comprises a first laboratory station 20, a second laboratory station 30 and a laboratory sample distribution system 100 similarly to the laboratory automation system 10 according to the first embodiment as described with respect to fig. 3. Reference is therefore made primarily to the above description of fig. 3.

However, in contrast to the laboratory automation system 10 according to the first embodiment, the laboratory sample distribution system 100 of the laboratory automation system 10 according to the second embodiment comprises an alternative transport device 400 having a piggyback transport plane 410 that is located besides the or adjacent to the transport plane 110. The piggyback transport plane 410 is positioned on a first guide rail 430 and a second guide rail 435 such that the piggyback transport plane 410 can be moved along a side of the laboratory sample distribution system 100 by propulsion means or drive means that are not shown in fig. 4.

The piggyback transport plane 410 comprises six electro-magnetic actuators 420 that are arranged such that sample container carriers 140 carrying sample containers 145 and moving on the transport plane 110 as described above can also be moved on the piggyback transport plane 410. In the shown embodiment, a total of up to six sample container carriers 140 can be moved on the piggyback transport plane 410. Then, the piggyback transport plane 410 can be moved along the guide rails 430, 435 in order to transport the sample container carriers 140 over a certain distance.

The piggyback transport plane 410 being movable along the guide rails 430, 435 besides the transport plane 110 can also increase throughput and reliability as sample container carriers 140 can be transported over a certain distance and can especially circumvent lock-ups due to crowded areas on the piggyback transport plane 110.

It should be noted that the concept of transport devices 200, 300 and piggyback transport planes 410 being movable on guide rails 430, 435 can also be combined in a single laboratory sample distribution system 100 in order to provide for the respective advantages.

## Claims

1. Transport device (200, 300) for a laboratory sample distribution system (100),
- wherein the laboratory sample distribution system (100) comprises:
- a number of sample container carriers (140; 240a, 240b), wherein the sample container carriers (140; 240a, 240b) are adapted to carry one or more sample containers (145; 245a, 245b; 345a, 345b), wherein the sample containers (145; 245a, 245b; 345a, 345b) comprise samples,
- a transport plane (110), wherein the transport plane (110) is adapted to support the sample container carriers (140; 240a, 240b),
- drive means (120), wherein the drive means (120) are adapted to move the sample container carriers (140; 240a, 240b) on the transport plane (110), and
- a control device (150), wherein the control device (150) is configured to control the drive means (120) such that the sample container carriers (140; 240a, 240b) move over the transport plane (110) along predetermined transport paths,
- wherein the transport device (200, 300) comprises
- a number of posts (202, 302), and
- a piggyback transport plane (210, 310) being held above the transport plane (110) by means of the posts (202, 302) such that a free space (207, 307) is defined between the transport plane (110) and the piggyback transport plane (210, 310), when the transport device (200, 300) is placed on the transport plane (110), and
- wherein the transport device (200, 300) is adapted to be moved over the transport plane (110) by the drive means (120).

2. Transport device (200, 300) according to claim 1,
**characterized in that**
- the free space (207, 307) has a height exceeding a height of a compound comprising a sample container carrier (140; 240a, 240b) and a sample container (145; 245a, 245b; 345a, 345b) carried by the sample container carrier (140; 240a, 240b).

3. Transport device (200, 300) according to claim 1 or 2,
**characterized in that**
- the transport device (200, 300) comprises a number of magnetically active devices (205, 305) arranged in the posts (202, 302) for interaction with a magnetic field generated by the drive means (120) being embodied as electro-magnetic actuators such that a magnetic drive force is applied to the transport device (200, 300).

4. Transport device (200, 300) according to one of the preceding claims,
**characterized in that**
- the drive means are formed as wheels driven by electric motors being located in the posts (202, 302) and being controllable by the electronic control device (150) of the sample distribution system (100).

5. Transport device (200, 300) according to one of the preceding claims,
**characterized in that**
- the transport device (200) comprises a number of electro-magnetic actuators (220) being located below the piggyback transport plane (210) and being adapted to generate a magnetic field for interaction with magnetically active devices comprised by the sample container carriers (240a, 240b) such that a magnetic drive force is applied to the sample container carriers (240a, 240b) when being supported by the piggyback transport plane (210).

6. Transport device (200, 300) according to one of the preceding claims,
**characterized in that**
- the piggyback transport plane (310) comprises a number of flat areas (312, 314, 316) being adapted to support items, especially cartridges, for transport by means of the transport device (300) over the transport plane (110).

7. Transport device (200, 300) according to claim 6,
**characterized in that**
- the flat areas (312, 314, 316) are divided from each other and/or from an area comprising electro-magnetic actuators located below the piggyback transport plane (310) by bars (360, 362) or rails.

8. Transport device (200, 300) according to one of the preceding claims,
**characterized in that**
- the transport device (300) comprises a number of sample container holding means (340a, 340b) positioned on the piggyback transport plane (310),
- wherein the sample container holding means (340a, 340b) are adapted to carry one or more sample containers (345a, 345b).

9. Transport device (200, 300) according to one of the preceding claims,
**characterized in that**
- the transport device (200, 300) comprises a handling means adapted
- to transfer sample containers (345a, 345b) to and from sample container holding means (340a, 340b) of the transport device (200, 300), or
- to transfer sample container carriers (240a, 240b) and/or items to and from the piggyback transport plane (210).

10. Transport device (200, 300) according to one of the preceding claims,
**characterized in that**
- the transport device (200, 300) comprises means to vertically lift the piggyback transport plane (210, 310) between an upper position and a lower position,
- wherein in the lower position the piggyback transport plane (210, 310) flushes with the transport plane (110), and
- wherein in the upper position the free space (207, 307) is defined between the transport plane (110) and the piggyback transport plane (210, 310).

11. Transport device (200, 300) according to one of the preceding claims,
**characterized in that**
- the transport device (200, 300) comprises a rechargeable battery (206) for power supply and charging means adapted to charge the battery (206) with electric power obtained from a power rail or by wireless power transmission.

12. Laboratory sample distribution system (100), comprising:
- a number of sample container carriers (140; 240a, 240b), wherein the sample container carriers (140; 240a, 240b) are adapted to carry one or more sample containers (145; 245a, 245b; 345a, 345b), wherein the sample containers (145; 245a, 245b; 345a, 345b) comprise samples,
- a transport plane (110), wherein the transport plane (110) is adapted to support the sample container carriers (140; 240a, 240b),
- a transport device (200, 300) according to one of the preceding claims, and
- drive means (120), wherein the drive means (120) are adapted to move the sample container carriers (140; 240a, 240b) and/or the transport device (200, 300) on the transport plane (110), and
- a control device (150), wherein the control device (150) is configured to control the drive means (120) such that the sample container carriers (140; 240a, 240b) and/or the transport device (200, 300) move over the transport plane (110) along predetermined transport paths.

13. Laboratory sample distribution system (100) according to claim 12,
**characterized in that**
- the control device (150) is configured to set a transport path for the transport device (200, 300) such that the piggyback transport plane of the transport device (200, 300) moves over a plurality of sample container carriers (140; 240a, 240b) carrying sample containers (145; 245a, 245b; 345a, 345b) and being positioned on the transport plane (110);
and/or
- the control device (150) is configured to control loading and unloading of sample container carriers (140; 240a, 240b) to and from the piggyback transport plane (210, 310).

14. Laboratory sample distribution system (100), comprising
- a number of sample container carriers (140; 240a, 240b), wherein the sample container carriers (140; 240a, 240b) are adapted to carry one or more sample containers (145; 245a, 245b; 345a, 345b), wherein the sample containers (145; 245a, 245b; 345a, 345b) comprise samples,
- a transport plane (110), wherein the transport plane (110) is adapted to support the sample container carriers (140; 240a, 240b),
- a number of piggyback transport planes (410), wherein the piggyback transport planes (410) are located besides the transport plane (110) and are movable along at least one edge of the transport plane (110),
- drive means (120), wherein the drive means (120) are adapted to move the sample container carriers (140; 240a, 240b) on the transport plane (110), on the piggyback transport planes (410) and between the transport plane (110) and the piggyback transport planes (410),
- a propulsion means to move the piggyback transport planes (410) along the at least one edge of the transport plane (110), and
- a control device (150), wherein the control device (150) is configured to control the drive means (120) such that the sample container carriers (140; 240a, 240b) move over the transport plane (110) and the piggyback transport planes (410) along predetermined transport paths.

15. Laboratory automation system (10), comprising:
- a number of laboratory stations (20, 30), and
- a laboratory sample distribution system (100) according to one of claims 12 to 14 adapted to distribute samples between the laboratory stations (20, 30).
